# EUROPEAN PATENT APPLICATION

(11) **EP 4 725 924 A1**
(43) Date of publication of application: **15.04.2026**
(21) Application number: 25819197.2
(22) Date of filing: 03.06.2025
(51) Int. Cl.: C03C 4/04, C09B 19/02, C03C 10/00

(54) **TEMPERED GLASS, PREPARATION METHOD THEREFOR AND USE THEREOF**

(30) Priority: 07.06.2024 CN 202410740153
(71) Applicant: Chongqing Aureavia Hi-Tech Glass Co., Ltd., Chongqing 400714 (CN)
(72) Inventor: TAN, Youhong, Chongqing 400714 (CN); LUO, Site, Chongqing 400714 (CN); TIAN, Qian, Chongqing 400714 (CN); YIN, Weiwei, Chongqing 400714 (CN); WANG, Li, Chongqing 400714 (CN); HUANG, Hao, Chongqing 400714 (CN)
(74) Representative: Dantz, Dirk
(86) International application number: PCT/CN2025/098862
(87) International publication number: WO 2025/252085

(57) **Abstract**

Tempered glass, a preparation method therefor and the use thereof. The difference between the average density of an exposed region and the average density of a non-exposed region of the tempered glass is controlled within a certain range, so as to achieve a balance between the density of the exposed region and the density of the non-exposed region, thereby reducing the amount of deformation of the tempered glass during thermal treatment while increasing the light transmittance difference between the exposed region and the non-exposed region, and thus reducing the degree of warpage of the tempered glass.

## Description

### CROSS-REFERENCE TO RELATED APPLICATIONS

This disclosure claims priority to Chinese Patent Application No. 202410740153.3, titled "STRENGTHENED GLASS, PREPARATION METHOD THEREFOR AND USE THEREOF" filed before the China National Intellectual Property Administration on June 7, 2024, which is incorporated herein by reference in its entirety.

### TECHNICAL FIELD

The present disclosure relates to the technical field of glass, in particular to a strengthened glass, a preparation method therefor and use thereof.

### BACKGROUND

Strengthened glass is a glass material that undergoes structural changes under irradiation of light at a specific wavelength and consequently exhibits special properties. When under ultraviolet light irradiation, structural changes occur inside the strengthened glass, leading to the formation of a crystal nucleus, followed by a heat treatment at a given temperature causes the generation of a glass with specific component microcrystals in the irradiated area. The component microcrystals in this irradiated area have the characteristics of weakening the intensity of transmitted light and shielding the light source.

After UV exposure and heat treatment, an opaque area that shields light can be formed in the exposed area of strengthened glass. This area has low light transmittance and possesses light-shielding properties compared to the substrate glass in the unexposed portion. Therefore, when applying the strengthened glass to mobile phone cover plate, through structural design of the strengthened glass, interference between light emitted by adjacent LEDs can be avoided, thereby preventing the formation of optical crosstalk phenomena.

Currently, researches on strengthened glass mainly focus on reducing the light transmittance of the UV-exposed area of the material. However, during the heat treatment process of substrate glass, there is a problem that large-sized substrate glass is prone to irregular deformation, causing increased warp and reducing production yield.

It should be noted that the content in this part of the present disclosure only provides background information related to the present disclosure and does not necessarily constitute prior art or common general knowledge.

### SUMMARY

An object of the present disclosure is to provide a strengthened glass, which can achieve a balance in density between the exposed area and the non-exposed area, thereby achieving an increase in the difference in light transmittance between the exposed area and the non-exposed area while reducing the warpage of the glass.

In order to achieve the above object, the present disclosure provides the following technical solutions:
A first aspect provides a strengthened glass, wherein the strengthened glass is obtained by processing treatment of a substrate glass; wherein the substrate glass comprises a first area and a second area; after performing masking treatment on the first area, performing processing treatment on the first area and the second area to obtain a non-exposed area and an exposed area respectively, wherein the second area is the area not subjected to masking treatment; and wherein a first area of the substrate glass corresponds to the first area of the strengthened glass, and a second area of the substrate glass corresponds to the second area of the strengthened glass;
the processing treatment comprises radiation treatment, heat treatment, and strengthening treatment;
the strengthened glass comprises the exposed area and the non-exposed area, an average density ρ₁ of the exposed area is greater than an average density ρ₂ of the non-exposed area, a difference Δρ between the average density ρ₁ of the exposed area and the average density ρ₂ of the non-exposed area is ≤ 0.01 g/cm³, preferably the difference Δρ is ≤ 0.005 g/cm³.

As an optional embodiment, the processing treatment further comprises one or more steps selected from the group consisting of blanking and cutting, CNC machining, grinding and polishing, cleaning, 3D hot bending, and buffing, performed before chemical strengthening.

As an optional embodiment, the average density ρ₁ of the exposed area satisfies 2.0000 g/cm³ ≤ ρ₁ ≤ 3.0000 g/cm³, preferably 2.3000 g/cm³ ≤ ρ₁ ≤ 2.7000 g/cm³, more preferably 2.3000 g/cm³ ≤ ρ₁ ≤ 2.5000 g/cm³; and/or,
the average density ρ₂ of the non-exposed area satisfies 2.0000 g/cm³ ≤ ρ₂ ≤ 3.0000 g/cm³, preferably 2.3000 g/cm³ ≤ ρ₂ ≤ 2.7000 g/cm³, more preferably 2.4000 g/cm³ ≤ ρ₂ ≤ 2.5000 g/cm³.

As an optional embodiment, the average density ρ₁ of the exposed area is 2.4714 g/cm³, 2.4846 g/cm³, 2.4896 g/cm³, 2.4872 g/cm³, 2.4918 g/cm³, 2.4964 g/cm³, 2.4753 g/cm³, or 2.4832 g/cm³; and/or,
the average density ρ₂ of the non-exposed area is 2.4709 g/cm³, 2.4796 g/cm³, 2.4826 g/cm³, 2.4806 g/cm³, 2.4893 g/cm³, 2.4932 g/cm³, 2.4704 g/cm³, or 2.4736 g/cm³.

As an optional embodiment, the difference Δρ between the average density ρ₁ of the exposed area and the average density ρ₂ of the non-exposed area is 0.0005 g/cm³, 0.005 g/cm³, 0.007 g/cm³, 0.0066 g/cm³, 0.0025 g/cm³, 0.0032 g/cm³, 0.0049 g/cm³, or 0.0096 g/cm³.

As an optional embodiment, an average crystal content X_{C1} in the exposed area is greater than an average crystal content X_{C2} in the non-exposed area; and/or,
the average crystal content X_{C1} in the exposed area satisfies 3.00% ≤ X_{C1} ≤ 25.00%, preferably 4.00% ≤ X_{C1} ≤ 20.00%, more preferably 4.00% ≤ X_{C1} ≤ 15.00% by mass percentage; and/or,
the average crystal content X_{C2} in the non-exposed area satisfies 0.50% ≤ X_{C2} ≤ 20.00%, preferably 1.00% ≤ X_{C2} ≤ 18.00%, more preferably 1.40% ≤ X_{C2} ≤ 13.00% by mass percentage.

As an optional embodiment, a surface CS of the strengthened glass is greater than or equal to 300 MPa, preferably greater than or equal to 350 MPa.

As an optional embodiment, a CS_50 of the strengthened glass is 50 MPa to 100 MPa, preferably 55 MPa to 95 MPa.

As an optional embodiment, the average crystal content X_{C1} in the exposed area is 4.27%, 7.12%, 8.31%, 7.53%, 10.23%, 14.42%, 5.42%, or 6.32% by mass percentage; and/or,
the average crystal content X_{C2} in the non-exposed area is 1.49%, 5.14%, 6.35%, 5.65%, 8.54%, 12.53%, 3.56%, or 4.45% by mass percentage.

As an optional embodiment, the strengthened glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.13%, and Sb₂O₃: 0% to 0.50%, based on a mass percentage of oxides;
wherein X is Ag, Cu, Au, Bi and/or the oxides thereof.

As an optional embodiment, the strengthened glass comprises:
SiO₂ with a mass percentage of 66.00% to 74.50%, preferably SiO₂ with a mass percentage of 66.50% to 74.00%; and/or,
Al₂O₃ with a mass percentage of 5.10% to 9.70%, preferably Al₂O₃ with a mass percentage of 5.20% to 9.40%; and/or,
Li₂O with a mass percentage of 7.10% to 12.80%, preferably Li₂O with a mass percentage of 7.20% to 12.60%; and/or,
Na₂O with a mass percentage of 2.10% to 3.80%, preferably Na₂O with a mass percentage of 2.10% to 3.60%; and/or,
K₂O with a mass percentage of 2.10% to 3.95%, preferably K₂O with a mass percentage of 2.10% to 3.90%; and/or,
ZrO₂ with a mass percentage of 5.10% to 6.90%, preferably ZrO₂ with a mass percentage of 5.10% to 6.80%; and/or,
Ag₂O with a mass percentage of 0.05% to 0.80%, preferably Ag₂O with a mass percentage of 0.22% to 0.48%; and/or,
CeO₂ with a mass percentage of 0.05% to 0.12%, preferably CeO₂ with a mass percentage of 0.06% to 0.12%; and/or,
Sb₂O₃ with a mass percentage of 0.06% to 0.48%, preferably Sb₂O₃ with a mass percentage of 0.07% to 0.46%, based on the mass percentage of oxides.

As an optional embodiment, the strengthened glass comprises:
SiO₂ with a mass percentage of 66.93%, 68.16%, 70.07%, 72.61%, 70.01%, 73.52%, 69.94%, or 72.40%; and/or,
Al₂O₃ with a mass percentage of 7.19%, 9.19%, 7.86%, 5.23%, 7.87%, 7.35%, 8.36%, or 5.87%; and/or,
Li₂O with a mass percentage of 12.32%, 11.56%, 8.95%, 10.25%, 8.93%, 7.33%, 9.77%, or 9.80%; and/or,
Na₂O with a mass percentage of 3.47%, 2.14%, 3.11%, 2.66%, 3.08%, 2.41%, 2.32%, or 2.84%; and/or,
K₂O with a mass percentage of 3.83%, 3.02%, 3.72%, 2.42%, 3.74%, 2.15%, 3.34%, or 2.34%; and/or,
ZrO₂ with a mass percentage of 5.62%, 5.12%, 5.74%, 6.25%, 5.71%, 6.78%, 5.54%, or 5.77%; and/or,
Ag₂O with a mass percentage of 0.25%, 0.41%, 0.37%, 0.35%, 0.39%, 0.33%, 0.28%, or 0.43%; and/or,
CeO₂ with a mass percentage of 0.12%, 0.08%, 0.09%, 0.11%, 0.06%, 0.10%, or 0.12%; and/or,
Sb₂O₃ with a mass percentage of 0.27%, 0.32%, 0.09%, 0.12%, 0.16%, 0.07%, 0.35%, or 0.43%, based on the mass percentage of oxides.

As an optional embodiment, the exposed area has a low transmittance within the infrared wavelength range, and the non-exposed area has a high transmittance within the infrared wavelength range; and/or,
at a thickness of 0.70 mm, for light with a wavelength of 550 nm, a transmittance T₁ of the exposed area is less than 20%, preferably the transmittance T₁ is less than 10%, more preferably the transmittance T₁ is less than 5%, and most preferably T₁ is 0, and a transmittance T₂ of the non-exposed area is greater than or equal to 90%; and/or,
at a thickness of 0.70 mm, for light with a wavelength of 850 nm, a transmittance T₃ of the exposed area is 0% to 10%, preferably the transmittance T₃ is less than 5%, and a transmittance T₄ of the non-exposed area is greater than or equal to 90%; and/or,
at a thickness of 0.70 mm, for light with a wavelength of 1000 nm, a transmittance T₅ of the exposed area is 0% to 5%, and a transmittance T₆ of the non-exposed area is greater than or equal to 90%.

As an optional embodiment, a crystalline phase of the exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal; and/or,
a principal crystalline phase of the non-exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

A second aspect provides a preparation method for the strengthened glass as described above, the method comprising:
obtaining the substrate glass; performing masking treatment on the first area of the substrate glass, and not performing masking treatment on the second region of the substrate glass, then performing processing treatment on the first area and the second area to obtain the non-exposed area and the exposed area respectively, the processing treatment comprising radiation treatment, heat treatment, and strengthening treatment; wherein, the first area of the substrate glass corresponds to the first area of the strengthened glass, and the second area of the substrate glass corresponds to the second area of the strengthened glass;
the strengthened glass comprises the exposed area and the non-exposed area, the average density ρ₁ of the exposed area is greater than the average density ρ₂ of the non-exposed area, the difference Δρ between the average density ρ₁ of the exposed area and the average density ρ₂ of the non-exposed area is ≤ 0.01 g/cm³, preferably the difference Δρ is ≤ 0.005 g/cm³.

As an optional embodiment, the average density ρ₁ of the exposed area satisfies 2.0000 g/cm³ ≤ ρ₁ ≤ 3.0000 g/cm³, preferably 2.3000 g/cm³ ≤ ρ₁ ≤ 2.7000 g/cm³, more preferably 2.3000 g/cm³ ≤ ρ₁ ≤ 2.5000 g/cm³; and/or,
the average density ρ₂ of the non-exposed area satisfies 2.0000 g/cm³ ≤ ρ₂ ≤ 3.0000 g/cm³, preferably 2.3000 g/cm³ ≤ ρ₂ ≤ 2.7000 g/cm³, more preferably 2.4000 g/cm³ ≤ ρ₂ ≤ 2.5000 g/cm³.

As an optional embodiment, the average crystal content X_{C1} in the exposed area is greater than the average crystal content X_{C2} in the non-exposed area; and/or,
the average crystal content X_{C1} in the exposed area satisfies 3.00% ≤ X_{C1} ≤ 25.00%, preferably 4.00% ≤ X_{C1} ≤ 20.00%, more preferably 4.00% ≤ X_{C1} ≤ 15.00% by mass percentage; and/or,
the average crystal content X_{C2} in the non-exposed area satisfies 0.50% ≤ X_{C2} ≤ 20.00%, preferably 1.00% ≤ X_{C2} ≤ 18.00%, more preferably 1.40% ≤ X_{C2} ≤ 13.00% by mass percentage.

As an optional embodiment, the substrate glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.13%, and Sb₂O₃: 0% to 0.50%, based on the mass percentage of oxides;
wherein X is Ag, Cu, Au, Bi and/or the oxides thereof.

As an optional embodiment, the radiation treatment comprises ultraviolet irradiation treatment.

As an optional embodiment, a wavelength of the ultraviolet irradiation treatment is 300 nm to 320 nm; and/or,
an intensity of the ultraviolet irradiation treatment is 240 mW/cm² to 260 mW/cm².

As an optional embodiment, the masking treatment comprises masking using a masking ink and/or a mask.

As an optional embodiment, the heat treatment comprises nucleation treatment and crystallization treatment.

As an optional embodiment, a heating rate of the nucleation treatment is 1 °C/min to 10 °C/min; and/or,
a temperature of the nucleation treatment is 450 °C to 600 °C; and/or,
a time of the nucleation treatment is 180 min to 300 min; and/or,
a heating rate of the crystallization treatment is 1 °C/min to 10 °C/min; and/or,
a temperature of the crystallization treatment is 550 °C to 800 °C; and/or,
a time of the crystallization treatment is 30 min to 180 min.

A third aspect provides a cover plate glass, wherein the cover plate glass is made of the strengthened glass according to any one of the embodiments of the first aspect.

A fourth aspect provides an electronic device, wherein the electronic device comprises the strengthened glass according to any one of the embodiments of the first aspect.

As an optional embodiment, the electronic device comprises a housing assembled on the outside of the electronic device, and the housing comprises the strengthened glass according to any one of the embodiments of the first aspect.

As an optional embodiment, the electronic device further comprises a camera component located inside the housing, the housing comprises a camera protection cover plate, the camera protection cover plate covers the camera component, and the camera protection cover plate comprises the strengthened glass according to any one of the embodiments of the first aspect.

In some embodiments, the housing partially uses the strengthened glass, or entirely uses the strengthened glass.

A fifth aspect provides a use of a strengthened glass in a component for a mobile phone, a smartwatch, a wearable device, a camera module, or a vehicle, wherein the strengthened glass is the strengthened glass according to any one of the embodiments of the first aspect or the strengthened glass prepared by the preparation method according to any one of the embodiments of the second aspect.

One or more of the above technical solutions provided in the present disclosure, compared with the prior art, comprise the following advantages:
the present disclosure, by controlling the difference Δρ between the average density ρ₁ of the exposed area and the average density ρ₂ of the non-exposed area of the strengthened glass to be within the range of less than or equal to 0.01 g/cm³, achieves a balance in density between the exposed area and the non-exposed area, thereby achieving an increase in the difference in light transmittance between the exposed area and the non-exposed area, while reducing the deformation amount of the strengthened glass during the heat treatment process, and reducing the warpage of the strengthened glass.

### BRIEF DESCRIPTION OF THE DRAWINGS

In order to illustrate the technical solutions of the examples of the present disclosure more clearly, the drawings required for describing the examples will be briefly introduced below. It should be understood that the following drawings show only some examples of the present disclosure and therefore should not be considered as limiting the scope. For those of ordinary skill in the art, other related drawings can be obtained based on these drawings without creative effort.
FIG. 1 is a structural schematic diagram of a mask provided in an embodiment of the present disclosure.
FIG. 2 is a structural schematic diagram of a single hole in the mask provided in an embodiment of the present disclosure.
FIG. 3 is a structural schematic diagram of a strengthened glass provided in an embodiment of the present disclosure.
FIG. 4 is a rear structural schematic diagram of an electronic device mentioned in an embodiment of the present disclosure.
FIG. 5 is a first structural schematic diagram of an electronic device mentioned in an embodiment of the present disclosure.
FIG. 6 is a second structural schematic diagram of an electronic device mentioned in an embodiment of the present disclosure.
FIG. 7 is a diagram showing a comparison of XRD diffraction curves between the exposed area and non-exposed area of the strengthened glass provided in Example 1 of the present disclosure.
FIG. 8 is a diagram showing a comparison of transmittance curves of the exposed area and non-exposed area of the strengthened glass provided in Example 7 of the present disclosure.

Reference numerals: 1 - housing; 12 - back cover; 13 - camera protection cover plate; 2 - camera component; 3 - middle frame; 4 - display module; 5 - mask; 51 - light-transmitting area; 52 - light-shielding area; 6 - strengthened glass; 61 - exposed area; 62 - non-exposed area.

### DETAILED DESCRIPTION

The embodiments of the present disclosure will be described in detail below with reference to examples, but those skilled in the art will understand that the following examples are only configured to illustrate the present disclosure and should not be considered as limiting the scope of the present disclosure. If specific conditions are not indicated in the examples, they are performed under conventional conditions or under the conditions recommended by the manufacturer. If the manufacturer of a reagent or instrument is not indicated, it is a conventional product that can be purchased commercially.

The endpoints and any values of the ranges disclosed herein are not limited to the precise ranges or values, and these ranges or values should be understood to comprise values close to these ranges or values. For numerical ranges, the endpoint values of each range, the endpoint values of each range and separate point values, and separate point values can be combined with each other to obtain one or more new numerical ranges, which should be considered as specifically disclosed herein. Among them, the terms "optional" and "optionally" both mean that they may be comprised or may not be comprised (or may exist or may not exist). The term "and/or" as used herein is inclusive, for example, "A and/or B" means only A, or only B, or both A and B.

### Term Explanation and Test Methods:

In the present disclosure, the main surface refers to the surface with the largest area, for example, the upper surface or lower surface of a horizontally placed strengthened glass sheet.

In the present disclosure, the infrared wavelength range refers to 750 nm to 1000 nm.

In the present disclosure, when light of a certain wavelength irradiates the main surface of the strengthened glass, the light will be reflected, absorbed, and transmitted. The ratio of the intensity of the transmitted part to the intensity of the incident light is the transmittance.

In the present disclosure, a crystallized glass raw material refers to a glass raw material that has undergone heat treatment for a period of time, reaching a certain crystallinity but not yet reaching the target crystallinity, and can continue to crystallize upon heating to reach the target crystallinity.

In the present disclosure, surface CS refers to surface compressive stress. After chemical strengthening of the substrate glass, smaller-radius alkali metal ions on the surface are replaced by larger-radius alkali metal ions. Due to the crowding out effect of the larger-radius alkali metal ions, compressive stress is generated on the glass surface, which is called surface compressive stress.

In the present disclosure, CS_50 refers to the compressive stress value at a depth of 50 µm from the glass surface.

In the present disclosure, the thickness of the glass was tested by a micrometer.

In the present disclosure, density testing was performed using an electronic density balance SD-200L of Japanese ALFAMIRAGE to test the density of the strengthened glass. In the present disclosure, the density of different positions of the same piece of glass was tested and the average density was taken.

In the present disclosure, the size specifications of the glass sheet were tested using a 2D video measuring machine (instrument model Miyu MY-YXCL-4030).

In the present disclosure, the warpage of the glass was tested by a laser gaugemeter.

Surface CS was tested using Japan ORIHARA's FSM-6000. Test conditions: light source wavelength 596 nm, SOC=28.6 (nm/cm)/MPa, refractive index=1.52.

CS_50 was tested using Japan Luceo's (Japan ORIHARA) stressmeter SLP-2000. Test conditions: light source wavelength 518 nm, SOC=28.6 (nm/cm)/MPa, refractive index=1.52, exposure time: 5000 usec.

In the present disclosure, the crystalline phase and crystal content of the glass were confirmed by XRD testing as follows:
(1) XRD testing: the strengthened glass of the present disclosure was crushed and ground into samples with particle size less than 75 µm. The ground samples were tested using an X-ray diffractometer to obtain the XRD diffraction peak curve and XRD diffraction data. The X-ray diffractometer used in the present disclosure was Shimadzu XRD-6100, target material was copper, 20 = 10 °to 50 °, scanning speed was 6 °/min, operating voltage was 40 kV, and operating current was 30 mA.
(2) Determination of crystalline phase: the XRD diffraction data were analyzed using Jade software (JADE Standard 8.6) to determine the crystalline phases in the sample.
(3) Determination of crystal content (also known as crystallinity): the XRD test results (RAW format) were imported into the X-ray diffraction data Rietveld refinement software Jade for fitting and calculation, and the crystallinity of the sample was determined. Specifically, the ratio of the fitted crystalline phase peak area to the fitted total peak area was recorded as the crystal content of the sample. In the present disclosure, the crystal content at different positions of the same piece of glass was tested and the average crystal content was taken.

In the present disclosure, an ultraviolet-visible spectrophotometer was used to test the transmittance of the exposed area and non-exposed area of the strengthened glass of the present disclosure. Specifically, the ultraviolet-visible spectrophotometer was used to test the transmittance of the exposed area and non-exposed area of five pieces of strengthened glass from the same batch to light of different wavelengths. The average value of the transmittance measured for the exposed area and non-exposed area of the five pieces of strengthened glass at different wavelengths of light was taken as the transmittance result of the exposed area and non-exposed area of the strengthened glass at that wavelength. The ultraviolet-visible spectrophotometer used for testing in the present disclosure was a Shimadzu's UV-2000 ultraviolet-visible spectrophotometer.

The present disclosure, by controlling the difference between the average density of the exposed area and the average density of the non-exposed area of the strengthened glass within a certain range, achieves a balance in density between the exposed area and the non-exposed area, thereby achieving an increase in the difference in light transmittance between the exposed area and the non-exposed area, while reducing the deformation amount of the strengthened glass during the heat treatment process, and reducing the warpage of the strengthened glass.

In some embodiments of the present disclosure, the strengthened glass is provided. The strengthened glass is obtained by processing treatment of the substrate glass; wherein the substrate glass comprises the first area and the second area; after performing masking treatment on the first area, performing processing treatment on the first area and the second area to obtain the non-exposed area and the exposed area respectively, wherein the second area is the area not subjected to masking treatment; and wherein the first area of the substrate glass corresponds to the first area of the strengthened glass, and the second area of the substrate glass corresponds to the second area of the strengthened glass; the processing treatment comprises radiation treatment, heat treatment, and strengthening treatment; and
the strengthened glass comprises the exposed area and the non-exposed area, the average density ρ₁ of the exposed area is greater than the average density ρ₂ of the non-exposed area, and the difference Δρ between the average density ρ₁ of the exposed area and the average density ρ₂ of the non-exposed area is ≤ 0.01 g/cm³, preferably the difference Δρ is ≤ 0.005 g/cm³.

In some embodiments of the present disclosure, the difference Δρ between the average density ρ₁ of the exposed area and the average density ρ₂ of the non-exposed area is 0.0001 g/cm³, 0.0005 g/cm³, 0.0010 g/cm³, 0.0050 g/cm³, 0.0070 g/cm³, 0.0066 g/cm³, 0.0025 g/cm³, 0.0032 g/cm³, 0.0049 g/cm³, 0.0070 g/cm³, 0.0080 g/cm³, 0.0096 g/cm³, or 0.01 g/cm³, or a value within the numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the average density ρ₁ of the exposed area satisfies 2.0000 g/cm³ ≤ ρ₁ ≤ 3.0000 g/cm³, preferably 2.3000 g/cm³ ≤ ρ₁ ≤ 2.7000 g/cm³, more preferably 2.3000 g/cm³ ≤ ρ₁ ≤ 2.5000 g/cm³.

In some embodiments, the average density ρ₁ of the exposed area is 2.1000 g/cm³, 2.2000 g/cm³, 2.3000 g/cm³, 2.4000 g/cm³, 2.5000 g/cm³, 2.6000 g/cm³, 2.7000 g/cm³, 2.8000 g/cm³, 2.9000 g/cm³, 3.0000 g/cm³, 2.4714 g/cm³, 2.4846 g/cm³, 2.4896 g/cm³, 2.4872 g/cm³, 2.4918 g/cm³, 2.4964 g/cm³, 2.4753 g/cm³, or 2.4832 g/cm³, or a value within the numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the average density ρ₂ of the non-exposed area satisfies 2.0000 g/cm³ ≤ ρ₂ ≤ 3.0000 g/cm³, preferably 2.3000 g/cm³ ≤ ρ₂ ≤ 2.7000 g/cm³, more preferably 2.4000 g/cm³ ≤ ρ₂ ≤ 2.5000 g/cm³.

In some embodiments, the average density ρ₂ of the non-exposed area is 2.1000 g/cm³, 2.2000 g/cm³, 2.3000 g/cm³, 2.4000 g/cm³, 2.5000 g/cm³, 2.6000 g/cm³, 2.7000 g/cm³, 2.8000 g/cm³, 2.9000 g/cm³, 3.0000 g/cm³, 2.4709 g/cm³, 2.4796 g/cm³, 2.4826 g/cm³, 2.4806 g/cm³, 2.4893 g/cm³, 2.4932 g/cm³, 2.4704 g/cm³, 2.4736 g/cm³, 2.4900 g/cm³, or 2.4950 g/cm³, or a value within the numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the average crystal content X_{C1} in the exposed area of the strengthened glass is greater than the average crystal content X_{C2} in the non-exposed area.

In some embodiments of the present disclosure, the average crystal content X_{C1} in the exposed area satisfies 3.00% ≤ X_{C1} ≤ 25.00%, preferably 4.00% ≤ X_{C1} ≤ 20.00%, more preferably 4.00% ≤ X_{C1} ≤ 15.00% by mass percentage.

In some embodiments, the average crystal content X_{C1} in the exposed area is 3.00%, 4.00%, 5.00%, 6.00%, 7.00%, 8.00%, 9.00%, 10.00%, 11.00%, 12.00%, 13.00%, 14.00%, 15.00%, 16.00%, 17.00%, 18.00%, 19.00%, 20.00%, 21.00%, 22.00%, 23.00%, 24.00%, 25.00%, 4.27%, 7.12%, 8.31%, 7.53%, 10.23%, 14.42%, 5.42%, or 6.32%, or a value within the numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the average crystal content X_{C2} in the non-exposed area satisfies 0.50% ≤ X_{C2} ≤ 20.00%, preferably 1.00% ≤ X_{C2} ≤ 18.00%, more preferably 1.40% ≤ X_{C2} ≤ 13.00% by mass percentage.

In some embodiments, the average crystal content X_{C2} in the non-exposed area is 0.50%, 1.00%, 2.00%, 3.00%, 4.00%, 5.00%, 6.00%, 7.00%, 8.00%, 9.00%, 10.00%, 11.00%, 12.00%, 13.00%, 14.00%, 15.00%, 16.00%, 17.00%, 18.00%, 19.00%, 20.00%, 1.49%, 5.14%, 6.35%, 5.65%, 8.54%, 12.53%, 3.56%, or 4.45%.

It should be understood that the strengthened glass of the present disclosure is obtained by processing treatment of the substrate glass, wherein the processing treatment comprises radiation treatment, heat treatment (comprising nucleation treatment and crystallization treatment), and strengthening treatment. The composition of the substrate glass is the same as or basically the same as the composition of the strengthened glass, based on the mass percentage of oxides.

In some embodiments of the present disclosure, the strengthened glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.13%, and Sb₂O₃: 0% to 0.50%, based on the mass percentage of oxides;
wherein X is Ag (silver), Cu (copper), Au (gold), Bi (bismuth) and/or the oxides thereof. It should be noted that X being Ag, Cu, Au, Bi and/or the oxides thereof means that X is at least one selected from the group consisting of Ag, Cu, Au, Bi, Ag₂O, CuO, Au₂O₃, and Bi₂O₃.

In the present disclosure, SiO₂ is a glass-forming oxide. It forms an irregular continuous network with structural units of silicon-oxygen tetrahedra, which constitutes as the skeleton for glass formation. An increase in SiO₂ content can raise the T_{g} temperature of the glass, enhance thermal stability, and facilitate to suppress phase separation during heat treatment of the glass. However, excessive SiO₂ can lead to high glass viscosity and a high melting temperature. A decrease in the content of SiO₂ is beneficial for lowering the melting temperature of the glass and inhibiting component volatilization during glass melting. However, too little SiO₂ can cause easy phase separation during heat treatment of the glass, and the T_{g} temperature will decrease accordingly, leading to poor thermal stability. In some embodiments of the present disclosure, the mass percentage of SiO₂ in the strengthened glass or the substrate glass used for preparing the strengthened glass is 65.00% to 75.00%, preferably 66.00% to 74.50%, more preferably 66.50% to 74.00%, based on the mass percentage of oxides.

In some embodiments of the present disclosure, the content of SiO₂ in the strengthened glass or the substrate glass used for preparing the strengthened glass can be 65.00%, 66.00%, 67.00%, 68.00%, 69.00%, 70.00%, 71.00%, 72.00%, 73.00%, 74.00%, 75.00%, 66.93%, 68.16%, 70.07%, 72.61%, 70.01%, 73.52%, 69.94%, or 72.40%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, Al₂O₃ is a glass network intermediate, entering the glass network structure in the form of [AlO₄] tetrahedra. An increase in Al₂O₃ can raise the T_{g} temperature of the glass, enhance thermal stability, and facilitate to suppress phase separation during heat treatment of the glass. However, excessive Al₂O₃ can increase the melting temperature of the glass. In some embodiments of the present disclosure, the mass percentage of Al₂O₃ in the strengthened glass or the substrate glass used for preparing the strengthened glass is 5.00% to 10.00%, preferably 5.10% to 9.70%, more preferably 5.20% to 9.40%, based on the mass percentage of oxides.

In some embodiments of the present disclosure, the content of Al₂O₃ in the strengthened glass or the substrate glass used for preparing the strengthened glass can be 5.00%, 5.50%, 6.00%, 6.50%, 7.00%, 7.50%, 8.00%, 8.50%, 9.00%, 9.50%, 10.00%, 7.19%, 9.19%, 7.86%, 5.23%, 7.87%, 7.35%, 8.36%, or 5.87%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, the alkali metal oxide Li₂O is a main component for forming crystals in the strengthened glass material and can also reduce the melting temperature of the glass. In some embodiments of the present disclosure, the mass percentage of Li₂O in the strengthened glass or the substrate glass used for preparing the strengthened glass is 7.00% to 13.00%, preferably 7.10% to 12.80%, more preferably 7.10% to 12.80%, based on the mass percentage of oxides.

In some embodiments of the present disclosure, the content of Li₂O in the strengthened glass or the substrate glass used for preparing the strengthened glass can be 7.00%, 7.50%, 8.00%, 8.50%, 9.00%, 9.50%, 10.00%, 10.50%, 11.00%, 11.50%, 12.00%, 12.50%, 13.00%, 12.32%, 11.56%, 8.95%, 10.25%, 8.93%, 7.33%, 9.77%, or 9.80%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, Na₂O and K₂O are glass network exo-oxide, serving as fluxing agents, which can reduce the melting temperature of the glass. In the presence of Na⁺ and K⁺, Na⁺ and K⁺ preferentially enter the aluminum-silicon-oxygen network to compensate for the charge, to some extent maintaining the lithium content in lithium-rich regions, making the Si/Li ratio in lithium-rich regions closer to the chemical proportion of Li₂SiO₃. Consequently, the strengthened glass comprising Na₂O and K₂O exhibits a precipitated crystalline phase of lithium metasilicate. However, excessive Na₂O and K₂O can lead to easy phase separation and opacification during heat treatment of the glass, an increase in the light absorption coefficient, and a decrease in the T_{g} temperature, resulting in poor thermal stability. In some embodiments of the present disclosure, the mass percentage of Na₂O in the strengthened glass or the substrate glass used for preparing the strengthened glass is 2.00% to 4.00%, preferably 2.10% to 3.80%, more preferably 2.10% to 3.60%, based on the mass percentage of oxides. In some embodiments of the present disclosure, the mass percentage of K₂O in the strengthened glass or the substrate glass used for preparing the strengthened glass is 2.00% to 4.00%, preferably 2.10% to 3.95%, more preferably 2.10% to 3.90%, based on the mass percentage of oxides.

In some embodiments of the present disclosure, the content of Na₂O in the strengthened glass or the substrate glass used for preparing the strengthened glass can be 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 3.47%, 2.14%, 3.11%, 2.66%, 3.08%, 2.41%, 2.32%, or 2.84%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In some embodiments of the present disclosure, the content of K₂O in the strengthened glass or the substrate glass used for preparing the strengthened glass can be 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 3.83%, 3.02%, 3.72%, 2.42%, 3.74%, 2.15%, 3.34%, or 2.34%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, ZrO₂ can increase the crystal content of the glass and refine the crystal grain size. An excessively low ZrO₂ content fails to act as a nucleating agent, while an excessively high content can lead to precipitation during high-temperature melting, affecting the crystal precipitation performance of the strengthened glass material. In some embodiments of the present disclosure, the mass percentage of ZrO₂ in the strengthened glass or the substrate glass used for preparing the strengthened glass is 5.00% to 7.00%, preferably 2.10% to 3.95%, more preferably 2.10% to 3.90%, based on the mass percentage of oxides.

In some embodiments of the present disclosure, the content of ZrO₂ in the strengthened glass or the substrate glass used for preparing the strengthened glass can be 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 5.62%, 5.12%, 5.74%, 6.25%, 5.71%, 6.78%, 5.54%, or 5.77%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, X is Ag, Cu, Au, Bi, and/or the oxides thereof. In some embodiments of the present disclosure, the content of X in the strengthened glass or the substrate glass used for preparing the strengthened glass can be 0.05%, 0.1%, 0.20%, 0.22%, 0.24%, 0.26%, 0.28%, 0.30%, 0.32%, 0.34%, 0.36%, 0.38%, 0.40%, 0.42%, 0.44%, 0.46%, 0.48%, 0.50%, 0.60%, 0.70%, or 0.80%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In some embodiments of the present disclosure, the mass percentage of Ag₂O is 0.05% to 0.80%, preferably 0.21% to 0.49%, more preferably 0.22% to 0.48%. In some embodiments of the present disclosure, the content of Ag₂O in the strengthened glass or the substrate glass used for preparing the strengthened glass can be 0.05%, 0.1%, 0.20%, 0.22%, 0.24%, 0.26%, 0.28%, 0.30%, 0.32%, 0.34%, 0.36%, 0.38%, 0.40%, 0.42%, 0.44%, 0.46%, 0.48%, 0.50%, 0.25%, 0.41%, 0.37%, 0.35%, 0.39%, 0.33%, 0.43%, 0.50%, 0.60%, 0.70%, or 0.80%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, CeO₂ is a photosensitizer, providing electrons for Ag⁺. When the content of CeO₂ is lower than 0.05%, it cannot provide sufficient electrons, resulting in too low crystal content and increasing the light transmittance of the glass in the exposed area. When the content of CeO₂ is higher than 0.13%, the transmittance of the glass in the ultraviolet exposure wavelength range decreases, and the penetration depth of ultraviolet light decreases, leading to a significant increase in the density of the exposed area. In some embodiments of the present disclosure, the mass percentage of CeO₂ in the strengthened glass or the substrate glass used for preparing the strengthened glass is 0.05% to 0.13%, preferably 0.05% to 0.12%, more preferably 0.06% to 0.12%, based on the mass percentage of oxides.

In some embodiments of the present disclosure, the content of CeO₂ in the strengthened glass or the substrate glass used for preparing the strengthened glass can be 0.05%, 0.06%, 0.07%, 0.08%, 0.09%, 0.10%, 0.11%, 0.12%, or 0.13%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In the present disclosure, Sb₂O₃ is a weak reducing agent and also acts as a clarifying agent. Sb³⁺ undergoes a redox reaction with Ce⁴⁺ during glass melting, maintaining the effective content of Ce³⁺. In some embodiments of the present disclosure, the mass percentage of Sb₂O₃ in the strengthened glass or the substrate glass used for preparing the strengthened glass is 0.05% to 0.50%, preferably 0.06% to 0.48%, more preferably 0.07% to 0.46%, based on the mass percentage of oxides.

In some embodiments of the present disclosure, the content of Sb₂O₃ in the strengthened glass or the substrate glass used for preparing the strengthened glass can be 0.05%, 0.10%, 0.15%, 0.20%, 0.25%, 0.30%, 0.35%, 0.40%, 0.45%, 0.50%, 0.27%, 0.32%, 0.09%, 0.12%, 0.16%, 0.07%, or 0.43%, or can be a value within a numerical range formed by any two of the above specific values as endpoints, based on the mass percentage of oxides, as long as the strengthened glass or substrate glass with the desired properties of the present disclosure can be obtained. It should be understood that, in specific embodiments, any of the above ranges can be combined with any other range, as long as the strengthened glass or substrate glass with the desired properties of the present disclosure can be obtained.

In some embodiments of the present disclosure, the exposed area has a low transmittance in the infrared wavelength range, and the non-exposed area has a high transmittance in the infrared wavelength range. The strengthened glass satisfying this transmittance can ensure that the non-exposed area has good light-transmitting performance and good transparency effect, while the exposed area has low light-transmitting performance and good light-shielding effect, making it suitable for use in cover plate glass that requires shielding of the light source. The "infrared wavelength range" here refers to light with a wavelength of 750 nm to 1000 nm.

In some embodiments of the present disclosure, at a thickness of 0.70 mm, for light with a wavelength of 550 nm, the transmittance T₁ of the exposed area is less than 20%, preferably the transmittance T₁ is less than 10%, preferably the transmittance T₁ is less than 5%, and preferably the transmittance T₁ is 0%, and the transmittance T₂ of the non-exposed area is greater than or equal to 90%.

In some embodiments, at a thickness of 0.70 mm, for light with a wavelength of 550 nm, the transmittance T₂ of the non-exposed area can be 90.00%, 90.10%, 90.20%, 90.30%, 90.40%, 90.50%, 91.00%, 92.00%, 91.05%, 90.98%, 90.73%, 90.83%, 90.65%, 90.51%, 91.02%, or 91.02%, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, at a thickness of 0.70 mm, for light with a wavelength of 850 nm, the transmittance T₃ of the exposed area is 0% to 10%, preferably the transmittance T₃ is less than 5%, and the transmittance T₄ of the non-exposed area is greater than or equal to 90%.

In some embodiments, at a thickness of 0.70 mm, for light with a wavelength of 850 nm, the transmittance T₄ of the non-exposed area can be 90.00%, 90.10%, 90.20%, 90.30%, 90.40%, 90.50%, 91.00%, 92.00%, 92.23%, 91.54%, 91.35%, 91.46%, 91.21%, 91.15%, 92.09%, or 91.76%, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments, the crystalline phase of the exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

In some embodiments, the crystalline phase of the non-exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

In some embodiments, the strengthened glass is a one-step strengthened glass, a two-step strengthened glass, or a glass-ceramic (comprising a one-step strengthened glass-ceramic, a two-step strengthened glass-ceramic, or a multiple-step strengthened glass-ceramic).

In some embodiments, the substrate glass can also be a bare glass, nucleated glass (for example, a glass that has undergone nucleation treatment without proceeding to crystallization treatment), or a glass-ceramic (for example, a one-step crystallized glass-ceramic, a two-step crystallized glass-ceramic, or a multiple-step crystallized glass-ceramic).

It can be understood that the crystallinity of the one-step e strengthened glass-ceramic, two-step strengthened glass-ceramic, multiple-step strengthened glass-ceramic, one-step crystallized glass-ceramic, two-step crystallized glass-ceramic, or multiple-step crystallized glass-ceramic can all be 10% to 100%.

In some embodiments of the present disclosure, both the exposed area and the non-exposed area can be glass-ceramics, or the exposed area can be a glass-ceramic while the non-exposed area is not a glass-ceramic.

In some embodiments of the present disclosure, the crystalline phase of the exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal. The crystalline phase of the non-exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

In the present disclosure, warpage refers to the warp generated during the heat treatment process of the substrate glass due to contraction or expansion caused by crystal precipitation in different regions. In some embodiments of the present disclosure, the warpage is not greater than 100 µm, preferably not greater than 90 µm, more preferably not greater than 80 µm.

In some embodiments, the warpage of the strengthened glass can be 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the strengthened glass is planar or curved.

In some embodiments of the present disclosure, the thickness of the strengthened glass of the present disclosure is not particularly limited, for example, it can be 0.4 to 2.0 mm; preferably 0.4 to 1.0 mm. In some embodiments of the present disclosure, the thickness of the strengthened glass of the present disclosure can be 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, or 2.0 mm, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In the present disclosure, chemical strengthening can be performed by an existing known method; for example, chemical strengthening comprises single-step chemical strengthening or multi-step chemical strengthening. In some embodiments of the present disclosure, the single-step chemical strengthening uses a salt bath comprising NaNO₃; preferably the content of NaNO₃ is 30 wt% to 100 wt%; preferably the single-step chemical strengthening uses a mixed salt bath comprising NaNO₃ and KNO₃, preferably the content of KNO₃ in the mixed salt bath is 80 wt% to 100 wt% and the content of NaNO₃ is 0 wt% to 20 wt%.

In some embodiments of the present disclosure, the temperature of the single-step chemical strengthening is 380 °C to 480 °C, preferably the ion exchange time of the single-step chemical strengthening is 5 to 10 hours.

In some embodiments of the present disclosure, the multi-step chemical strengthening comprises a two-step chemical strengthening, wherein the first step of chemical strengthening uses a salt bath comprising NaNO₃, preferably the content of NaNO₃ is 30 wt% to 100 wt%; the second step of chemical strengthening uses a salt bath comprising KNO₃, preferably the content of KNO₃ is 60 wt% to 100 wt%.

In some embodiments of the present disclosure, the temperature of the first step of chemical strengthening is 380 °C to 480 °C, preferably the time of the first step of chemical strengthening is 3 to 10 hours; preferably the temperature of the second step of chemical strengthening is 380 °C to 480 °C, preferably the time of the second step of chemical strengthening is 5 to 30 min.

In some embodiments of the present disclosure, the CS_50 of the strengthened glass of the present disclosure is 50 MPa to 100 MPa, preferably CS_50 is 55 MPa to 95 MPa. In some embodiments of the present disclosure, the CS_50 of the colored chemically strengthened glass of the present disclosure is 50 MPa, 55 MPa, 60 MPa, 65 MPa, 70 MPa, 75 MPa, 80 MPa, 82 MPa, 84 MPa, 86 MPa, 88 MPa, 90 MPa, 92 MPa, 94 MPa, 96 MPa, 98 MPa, or 100 MPa, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

In some embodiments of the present disclosure, the surface CS of the strengthened glass of the present disclosure is greater than or equal to 300 MPa, preferably greater than or equal to 350 MPa, further preferably the surface CS is 300 MPa to 600 MPa. In some embodiments of the present disclosure, the surface CS of the chemically strengthened glass of the present disclosure is 350 MPa, 380 MPa, 400 MPa, 450 MPa, 500 MPa, or 600 MPa, or can be a value within a numerical range formed by any two of the above specific values as endpoints, as long as the strengthened glass with the desired properties of the present disclosure can be obtained. It should be understood that, in specific embodiments, any of the above ranges can be combined with any other range, as long as the strengthened glass with the desired properties of the present disclosure can be obtained.

The preparation method of the strengthened glass of the present disclosure comprises: obtaining the substrate glass; performing masking treatment on the first area of the substrate glass, and not performing masking treatment on the second area of the substrate glass, then performing processing treatment on the first area and the second area to obtain the non-exposed area and the exposed area respectively, wherein the processing treatment comprises radiation treatment, heat treatment, and strengthening treatment; wherein the first area of the substrate glass corresponds to the first area of the strengthened glass, and the second area of the substrate glass corresponds to the second area of the strengthened glass.

In the present disclosure, molding methods in the prior art can be used to prepare the substrate glass, and the present disclosure imposes no limitation on this, for example, the molding method for the substrate glass can include, but is not limited to, float process, overflow process, rolling process, or casting process. By way of example, according to the formula, each component was mixed uniformly, melted and formed, then cooled and annealed to obtain the substrate glass.

By way of example, the raw materials (industrial conventional raw materials) were proportioned according to the formula ratio, a clarifying agent was added, and then mixed for a period of time to obtain a uniformly mixed raw material mixture. The raw material mixture was placed in a platinum crucible, heated to 1250 °C to 1680 °C, preferably the melting temperature was 1480 °C to 1680 °C, and preferably maintained at this temperature for 3 to 12 hours. Then it was poured into a molding mold for cooling and shaping, preferably cooled to 750 °C to 1000 °C, then placed in an annealing furnace for annealing treatment, preferably the annealing temperature was 400 °C to 650 °C, preferably the annealing time was 10 to 48 hours; thereafter, it was cooled to room temperature along with the annealing furnace to obtain the substrate glass. Those skilled in the art can select the type and amount of the clarifying agent according to requirements without creative effort. Furthermore, the clarifying agent can include, but is not limited to, one or more selected from the group consisting of sodium chloride, tin oxide, antimony oxide, arsenic oxide, and the like. The addition amount of the clarifying agent may be 0 wt% to 1 wt% of the total mass of the raw materials.

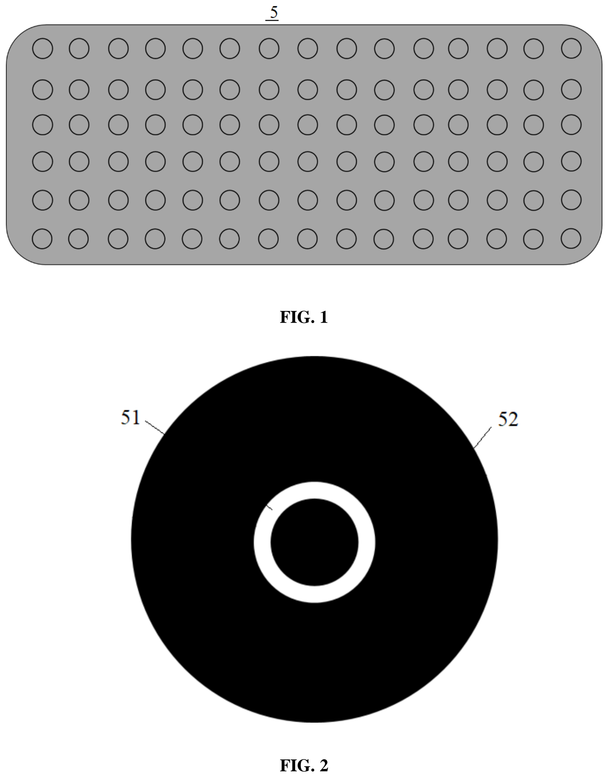

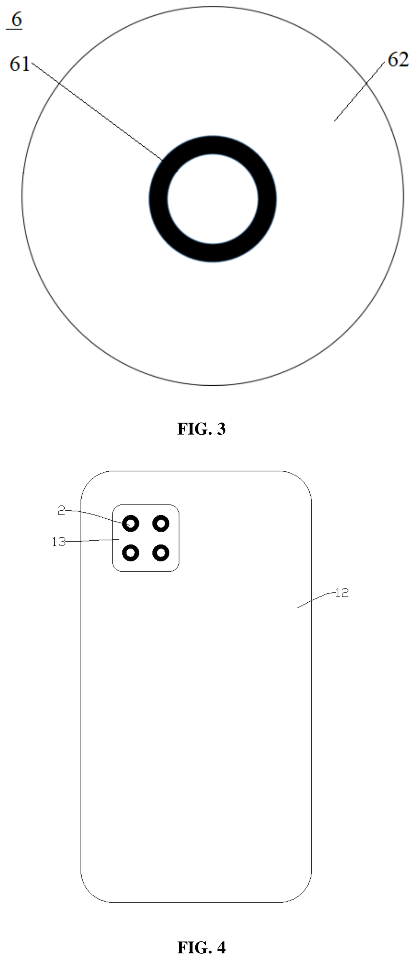

In some embodiments of the present disclosure, the method of radiation treatment comprises ultraviolet irradiation treatment, wherein the wavelength of the ultraviolet irradiation treatment is 300 nm to 320 nm, and the intensity of the ultraviolet irradiation treatment is 240 mW/cm² to 260 mW/cm². In some embodiments of the present disclosure, before performing the radiation treatment, the substrate glass is subjected to masking treatment, then performing radiation treatment and heat treatment to form the non-exposed area. The masking treatment comprises masking the substrate glass using the masking ink and/or the mask. The structure of the mask 5 is shown in FIG. 1, which is one kind of 36 composite circular holes, 48 composite circular holes, or 90 composite circular holes. The composite circular hole has a light-transmitting region 51 with an inner diameter and a light-shielding region 52 other than the inner diameter. A schematic diagram of the composite circular hole structure is shown in FIG. 2. The corresponding formed strengthened glass 6 structure is shown in FIG. 3, wherein the position corresponding to the light-transmitting region 51 forms the exposed area 61, and the position corresponding to the light-shielding region 52 forms the non-exposed area 62.

In some embodiments of the present disclosure, the heat treatment process of the substrate glass can comprise nucleation treatment and/or crystallization treatment, preferably nucleation treatment and crystallization treatment are used. In some embodiments, the crystallization treatment comprises single-step crystallization treatment or multi-step crystallization treatment. In some embodiments, in order to prepare a curved strengthened glass, a two-step crystallization treatment can be used. When the two-step crystallization treatment is used, the second step of crystallization treatment involves placing the crystallized glass material obtained from the first step of crystallization treatment into a hot-bending mold, heating to the crystallization temperature, and performing 3D hot-bending molding treatment.

In some embodiments of the present disclosure, in order to obtain the desired physical and chemical properties of the strengthened glass, when heat treating the substrate glass, single-step heat treatment can be performed, or two-step or multi-step heat treatment can be performed. If single-step heat treatment is performed, it means that treatment of nucleation (i.e., nucleation treatment) is not performed separately. Instead, a single-step temperature increase is further carried out, where nucleation and target crystal growth occur at the temperature reached during this single-step temperature increase, which can be understood as directly performing crystallization treatment. If two-step heat treatment is performed, it means that a two-step temperature increase process is carried out, first performing nucleation treatment, i.e., nucleation, and then performing target crystal growth treatment, i.e., crystallization treatment.

In order to precipitate the desired crystalline phase in the strengthened glass and obtain the desired physical and chemical properties, further, the temperature of the nucleation treatment can be 450 °C to 600 °C, and the time of the nucleation treatment can be 180 min to 300 min, preferably 210 min to 270 min. The temperature of the crystallization treatment can be 550 °C to 800 °C, and the time of the crystallization treatment can be 30 min to 180 min, preferably 60 min to 120 min. During heat treatment, the heating rate is preferably controlled at 1 °C/min to 10 °C/min, more preferably the heating rate is 10 °C/min. Here, the temperature of the nucleation treatment refers to the temperature at which nuclei can form. The temperature of the crystallization treatment refers to the temperature suitable for controllable growth of the target crystals.

Before and/or after the heat treatment, those skilled in the art can also perform other conventional steps to obtain the strengthened glass sample that meets the required specifications or requirements, for example, shaping treatment, cutting treatment (such as using a multi-wire saw for cutting), CNC (computer numerical control) processing treatment, thinning treatment, or polishing treatment steps, etc. There is no limitation in the present disclosure on the dimensional processing of the substrate glass or the strengthened glass samples, for example, it may be 50 mm ×50 mm ×1.0 mm, 300 mm × 120 mm ×0.7 mm, etc.

The strengthened glass with excellent properties provided by the present disclosure can be used in electronic devices, including but not limited to mobile phones, tablet computers, handheld game consoles, portable digital devices (such as digital cameras), smart home devices, smart wearable devices (such as smart bracelets, smart watches, smart glasses), can also be used in vehicles, aircraft, or vessels, and can also be used in glass devices requiring any desired strengthened glass. For example, it can be used in mobile phone back cover glass, smartwatch back cover glass, and the like; for example, it can be used for windshields of vehicles, aircraft, or vessels, such as front windshields or side windshields. For example, it can be used for work surfaces, other surfaces, appliance doors, floor tiles, wall panels, or storage containers, etc. Other surfaces can include, but are not limited to, exterior wall surfaces, stair tread surfaces, column facings, or countertop surfaces, etc. Storage containers can include, but are not limited to, cups, plates, medicine bottles, or beverage bottles, etc.

By way of example, the strengthened glass with excellent properties provided by the present disclosure can be used to manufacture glass devices. The glass devices referred to here can be regular or irregular, and those skilled in the art can manufacture them according to requirements.

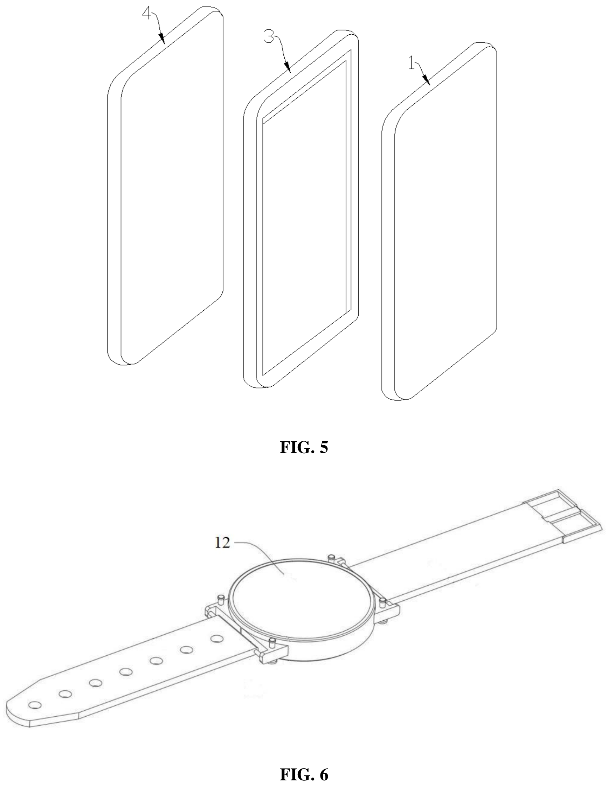

By way of example, the strengthened glass with excellent properties provided by the present disclosure can be used to manufacture the cover plate glass. The cover plate glass can be a back cover plate or a camera protection cover plate for an electronic device such as a mobile phone. By way of example, the strengthened glass with excellent properties provided by the present disclosure can be used in electronic devices. Referring to FIGs. 4, 5, and 6, in some embodiments of the present disclosure, an electronic device is provided, which can be a mobile phone (as shown in FIG. 5), a tablet computer, a smart wearable device (as shown in FIG. 6, where the strengthened glass can be used as the back cover of a smart watch), and other electronic products. The electronic device comprises a housing 1 assembled on the outer side of the electronic device. The housing 1 comprises a display screen cover plate assembled on the front side and a back cover 12 assembled on the rear side. The display screen cover plate is disposed over the display module 4. The back cover 12 employs the aforementioned strengthened glass. In the present disclosure, the back cover 12 may entirely employ the aforementioned strengthened glass, or may employ the aforementioned strengthened glass only in part. In the present disclosure, the display screen can be a touch display screen, and the display screen cover plate can be a protection cover plate placed on the touch display screen. In the present disclosure, the back cover 12 can cover only the rear side of the electronic device (i.e., the side opposite the display screen), or can simultaneously cover the rear side and the side frames of the electronic device. Optionally, the back cover 12 can cover all side frames around the electronic device, or can cover part of the side frames.

In some embodiments of the present disclosure, as shown in FIG. 4, the electronic device also comprises a camera component 2 located inside the housing 1. The housing 1 can comprise a camera protection cover plate 13. The camera protection cover plate 13 is disposed over the camera component 2 to protect the camera component 2. The camera protection cover plate 13 is made of the aforementioned strengthened glass. In the present disclosure, the camera protection cover plate 13 can be partially employ the aforementioned strengthened glass, or entirely employ the aforementioned strengthened glass. In the present disclosure, the location of the camera protection cover plate 13 depends on the location of the camera component 2. It can be located on the front side of the electronic device, or on the rear side of the electronic device. In some embodiments of the present disclosure, the camera protection cover plate 13 can be a separate structure from the back cover 12. In other embodiments of the present disclosure, the camera protection cover plate 13 can also be integrated with the back cover 12 as an integrated structure.

In some embodiments of the present disclosure, as shown in FIG. 5, the electronic device can also comprise a middle frame 3 located between the display module 4 and the housing 1. The middle frame 3 can comprise the aforementioned strengthened glass.

In embodiments of the present disclosure, for the back cover plate and camera protection cover plate in the electronic device, either one can employ the aforementioned strengthened glass, or can both employ the aforementioned strengthened glass.

The technical solutions of the present disclosure will be further described in detail below with reference to examples. The examples of the present disclosure described in detail below are exemplary and are only configured to explain the present disclosure, and should not be construed as limiting the present disclosure.

### Example 1

A strengthened glass, the preparation process of which is as follows:

### (1) Preparation of substrate glass:

The raw materials (industrial conventional raw materials) were proportioned according to the component ratios in Table 1, the total mass of the configured raw material was 5000g. 10g of the clarifying agent sodium chloride (NaCl) was added to the configured raw materials, and then they were mixed for 30 minutes using a V-type mixer to obtain a uniformly mixed raw material mixture.

The raw material mixture was transferred to a melting furnace, then melted at a temperature of 1500 °C. The melt was stirred with a platinum stirring rod. The melting time was 12 hours, subsequently drawn and formed, and continuously drawn into a glass brick of the required specification. The glass brick was quickly placed in an annealing furnace at 450 °C, maintained for 5 hours, then naturally cooled to room temperature to obtain a substrate glass brick.

The obtained substrate glass brick was subjected to sequential cold processing treatments of cutting, CNC machining (the CNC instrument model used in the present disclosure is: RCG500S), and polishing to prepare substrate glass samples meeting the required specifications and requirements. In Examples 1 to 8 of the present disclosure, the substrate glass bricks were subjected to the aforementioned cold processing treatments to prepare glass substrates with dimensions of 300 mm × 120 mm × 0.7 mm.

(2) Preparation of strengthened glass: The above glass substrate was sequentially ultrasonically cleaned in deionized water, anhydrous ethanol, propanol, and deionized water for 10 min each, then dried in a drying oven. The glass substrate and the mask were fixed together, placed horizontally in the predetermined path of the ultraviolet parallel light spot, with the mask on top and the glass substrate at the bottom. The wavelength of ultraviolet irradiation was 310 nm, the intensity of irradiation was 250 mW/cm², and the exposure time was 10 min. The exposed glass substrate and the mask were separated. Then, heat treatment was performed according to the heat treatment process in Table 1 to obtain a crystallized glass. The mask used had 90 composite circular holes, and the composite circular holes had light-transmitting regions and light-shielding regions, as shown in FIG. 2. The heat treatment comprised nucleation treatment and crystallization treatment. The heating rates of both the nucleation treatment and the crystallization treatment were 10 °C/min. The obtained crystallized glass sample was treated according to a two-step chemical strengthening process to obtain the strengthened glass. The specific conditions of the two-step chemical strengthening process are as described in Table 1.

The warpage generated during the heat treatment of the substrate glass was tested as shown in Table 1.

Testing of the strengthened glass sample obtained in Example 1:
the crystalline phase content, density, and transmittance (at light with wavelengths of 550 nm, 850 nm, and 1000 nm) of the exposed area and the non-exposed area of the strengthened glass sample were tested separately, and the results are shown in Table 1.

### Examples 2 to 8

These were conducted with reference to Example 1, with the differences being that the raw material compositions, different process parameters, and corresponding test results for each example are as shown in the tables.

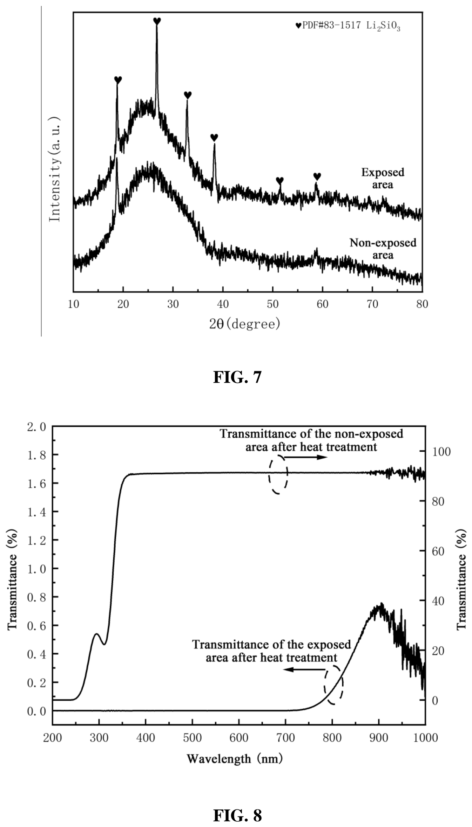

The XRD patterns of the exposed area and non-exposed area of the strengthened glass of Example 1 are shown in FIG. 7. From this figure, it can be seen that the crystalline phase structure of the strengthened glass comprises lithium metasilicate.

The transmittance curves of the exposed area and non-exposed area of the strengthened glass of Example 7 are shown in FIG. 8. From this figure, it can be seen that the exposed area of the strengthened glass has a low transmittance in the infrared wavelength range, and the non-exposed area of the strengthened glass has a high transmittance in the infrared wavelength range.

**Table 1**

| | Example 1 | Example 2 | Example 3 | Example 4 | Example 5 | Example 6 | Example 7 | Example 8 |
|---|---|---|---|---|---|---|---|---|
| SiO₂ | 66.93% | 68.16% | 70.07% | 72.61% | 70.01% | 73.52% | 69.94% | 72.40% |
| Al₂O₃ | 7.19% | 9.19% | 7.86% | 5.23% | 7.87% | 7.35% | 8.36% | 5.87% |
| Li₂O | 12.32% | 11.56% | 8.95% | 10.25% | 8.93% | 7.33% | 9.77% | 9.80% |
| Na₂O | 3.47% | 2.14% | 3.11% | 2.66% | 3.08% | 2.41% | 2.32% | 2.84% |
| K₂O | 3.83% | 3.02% | 3.72% | 2.42% | 3.74% | 2.15% | 3.34% | 2.34% |
| ZrO₂ | 5.62% | 5.12% | 5.74% | 6.25% | 5.71% | 6.78% | 5.54% | 5.77% |
| Ag₂O | 0.25% | 0.41% | 0.37% | 0.35% | 0.39% | 0.33% | 0.28% | 0.43% |
| CeO₂ | 0.12% | 0.08% | 0.09% | 0.11% | 0.11% | 0.06% | 0.10% | 0.12% |
| Sb₂O₃ | 0.27% | 0.32% | 0.09% | 0.12% | 0.16% | 0.07% | 0.35% | 0.43% |
| Temperature of nucleation | 500 °C | 500 °C | 500 °C | 500 °C | 500 °C | 500 °C | 500 °C | 500 °C |
| Time of nucleation | 180 min | 180 min | 180 min | 180 min | 180 min | 180 min | 180 min | 180 min |
| Temperature of crystallization | 600 °C | 600 °C | 600 °C | 600 °C | 600 °C | 600 °C | 600 °C | 600 °C |
| Time of crystallization | 180 min | 180 min | 180 min | 180 min | 180 min | 180 min | 180 min | 180 min |
| Crystalline phase of exposed area | Li₂SiO₃ | Li₂SiO₃ | Li₂SiO₃ | Li₂SiO₃ | Li₂SiO₃ | Li₂SiO₃ | Li₂SiO₃ | Li₂SiO₃ |
| Average crystal content X_{C1} | 4.27% | 7.12% | 8.31% | 7.53% | 10.23% | 14.42% | 5.42% | 6.32% |
| Crystalline phase of non-exposed area | Li₂SiO₃ | Li₂SiO₃ | Li₂SiO₃ | Li₂SiO₃ | Li₂SiO₃ | Li₂SiO₃ | Li₂SiO₃ | Li₂SiO₃ |
| Average crystal content X_{C2} | 1.49% | 5.14 | 6.35 | 5.65 | 8.54 | 12.53 | 3.56 | 4.45 |
| Salt bath of first step of chemical strengthening | 100 wt% NaNO₃ | 100 wt% NaNO₃ | 100 wt% NaNO₃ | 100 wt% NaNO₃ | 100 wt% NaNO₃ | 100 wt% NaNO₃ | 100 wt% NaNO₃ | 100 wt% NaNO₃ |
| Temperature of first step of chemical strengthening | 430 °C | 430 °C | 430 °C | 430 °C | 430 °C | 430 °C | 430 °C | 430 °C |
| Time of first step of chemical strengthening | 8h | 8h | 8h | 8h | 8h | 8h | 8h | 8h |
| Salt bath of second step of chemical strengthening | 100 wt% KNO₃ | 100 wt% KNO₃ | 100 wt% KNO₃ | 100 wt% KNO₃ | 100 wt% KNO₃ | 100 wt% KNO₃ | 100 wt% KNO₃ | 100 wt% KNO₃ |
| Temperature of second step of chemical strengthening | 430 °C | 430 °C | 430 °C | 430 °C | 430 °C | 430 °C | 430 °C | 430 °C |
| Time of second step of chemical strengthening | 10 min | 10 min | 10 min | 10 min | 10 min | 10 min | 10 min | 10 min |
| Surface CS of non-exposed area/MPa | 451 | 444 | 395 | 438 | 385 | 391 | 398 | 402 |
| CS_50 of non-exposed area/MPa | 78 | 77 | 73 | 76 | 72 | 73 | 74 | 74 |
| Average density ρ₁ | 2.4714 | 2.4846 | 2.4896 | 2.4872 | 2.4918 | 2.4964 | 2.4753 | 2.4832 |
| Average density ρ₂ | 2.4709 | 2.4796 | 2.4826 | 2.4806 | 2.4893 | 2.4932 | 2.4704 | 2.4736 |
| Δρ | 0.0005 | 0.005 | 0.007 | 0.0066 | 0.0025 | 0.0032 | 0.0049 | 0.0096 |
| Transmittance T₁ of exposed area (550 nm) | 0.00 | 0.00 | 0.00 | 0.00 | 0.00 | 0.00 | 0.00 | 0.00 |
| Transmittance T₂ of non-exposed area (550 nm) | 91.05 | 90.98 | 90.73 | 90.83 | 90.65 | 90.51 | 91.02 | 91.02 |
| Transmittance T₃ of exposed area (850 nm) | 0.62 | 0.31 | 1.54 | 1.33 | 0.94 | 1.85 | 0.43 | 0.23 |
| Transmittance T₄ of non-exposed area (850 nm) | 92.23 | 91.54 | 91.35 | 91.46 | 91.21 | 91.15 | 92.09 | 91.76 |
| Transmittance T₅ of exposed area (1000 nm) | 0.32 | 0.17 | 0.79 | 0.68 | 0.48 | 0.96 | 0.22 | 0.12 |
| Transmittance T₆ of non-exposed area (1000 nm) | 92.83 | 92.13 | 91.93 | 92.10 | 91.83 | 91.77 | 92.65 | 91.62 |
| Warpage (µm) | 20 | 55 | 63 | 60 | 40 | 45 | 54 | 80 |

From the examples in Table 1 above, it can be seen that in each example of the present disclosure, by controlling the difference Δρ between the average density ρ₁ of the exposed area and the average density ρ₂ of the non-exposed area of the strengthened glass to be within the range of less than or equal to 0.01 g/cm³, the strengthened glass exhibits low warp, which is below 80 µm.

The above are only specific embodiments of the present disclosure and are not intended to limit the present disclosure. For those skilled in the art, the present disclosure may have various modifications and changes. Any modifications, equivalent substitutions, improvements, etc., made within the spirit and principles of the present disclosure shall be comprised within the protection scope of the present disclosure.

### Industrial Applicability

The present disclosure, by controlling the difference Δρ between the average density ρ₁ of the exposed area and the average density ρ₂ of the non-exposed area of the strengthened glass to be within the range of less than or equal to 0.01 g/cm³, achieves a balance in density between the exposed area and the non-exposed area. This is done so as to achieving an increase in the difference in light transmittance between the exposed area and the non-exposed area, while reducing the deformation amount of the strengthened glass during the heat treatment process, and reducing the warpage of the strengthened glass.

## Claims

1. A strengthened glass obtained by processing treatment of a substrate glass; wherein the substrate glass comprises a first area and a second area; after performing masking treatment on the first area, performing processing treatment on the first area and the second area to obtain a non-exposed area and an exposed area respectively, wherein the second area is not subjected to masking treatment, and wherein a first area of the substrate glass corresponds to the first area of the strengthened glass, and a second area of the substrate glass corresponds to the second area of the strengthened glass;
the processing treatment comprises radiation treatment, heat treatment, and strengthening treatment; and
the strengthened glass comprises the exposed area and the non-exposed area, an average density ρ₁ of the exposed area is greater than an average density ρ₂ of the non-exposed area, and a difference Δρ between the average density ρ₁ of the exposed area and the average density ρ₂ of the non-exposed area is ≤ 0.01 g/cm³, preferably the difference Δρ is ≤ 0.005 g/cm³.

2. The strengthened glass according to claim 1, wherein the processing treatment further comprises one or more steps selected from the group consisting of blanking and cutting, CNC machining, grinding and polishing, cleaning, 3D hot bending, and buffing, performed before strengthening.

3. The strengthened glass according to any one of claims 1 to 2, wherein the masking treatment comprises masking using a masking ink and/or a mask.

4. The strengthened glass according to any one of claims 1 to 3, wherein the radiation treatment comprises ultraviolet irradiation treatment.

5. The strengthened glass according to claim 4, wherein a wavelength of the ultraviolet irradiation treatment is 300 nm to 320 nm; and/or, an intensity of the ultraviolet irradiation treatment is 240 mW/cm² to 260 mW/cm².

6. The strengthened glass according to any one of claims 1 to 5, wherein the heat treatment comprises nucleation treatment and crystallization treatment.

7. The strengthened glass according to claim 6, wherein a heating rate of the nucleation treatment is 1 °C/min to 10 °C/min; and/or,
a temperature of the nucleation treatment is 450 °C to 600 °C; and/or,
a time of the nucleation treatment is 180 min to 300 min; and/or,
a heating rate of the crystallization treatment is 1 °C/min to 10 °C/min; and/or,
a temperature of the crystallization treatment is 550 °C to 800 °C; and/or,
a time of the crystallization treatment is 30 min to 180 min.

8. The strengthened glass according to any one of claims 1 to 7, wherein the difference Δρ between the average density ρ₁ of the exposed area and the average density ρ₂ of the non-exposed area is 0.0005 g/cm³, 0.005 g/cm³, 0.007 g/cm³, 0.0066 g/cm³, 0.0025 g/cm³, 0.0032 g/cm³, 0.0049 g/cm³, or 0.0096 g/cm³.

9. The strengthened glass according to any one of claims 1 to 8, wherein the average density p₁ of the exposed area satisfies 2.0000 g/cm³ ≤ ρ₁ ≤ 3.0000 g/cm³, preferably 2.3000 g/cm³ ≤ ρ₁ ≤ 2.7000 g/cm³, more preferably 2.3000 g/cm³ ≤ ρ₁ ≤ 2.5000 g/cm³; and/or,
the average density ρ₂ of the non-exposed area satisfies 2.0000 g/cm³ ≤ ρ₂ ≤ 3.0000 g/cm³, preferably 2.3000 g/cm³ ≤ ρ₂ ≤ 2.7000 g/cm³, more preferably 2.4000 g/cm³ ≤ ρ₂ ≤ 2.5000 g/cm³.

10. The strengthened glass according to any one of claims 1 to 9, wherein the average density ρ₁ of the exposed area is 2.4714 g/cm³, 2.4846 g/cm³, 2.4896 g/cm³, 2.4872 g/cm³, 2.4918 g/cm³, 2.4964 g/cm³, 2.4753 g/cm³, or 2.4832 g/cm³; and/or
the average density ρ₂ of the non-exposed area is 2.4709 g/cm³, 2.4796 g/cm³, 2.4826 g/cm³, 2.4806 g/cm³, 2.4893 g/cm³, 2.4932 g/cm³, 2.4704 g/cm³, or 2.4736 g/cm³.

11. The strengthened glass according to any one of claims 1 to 10, wherein an average crystal content X_{C1} in the exposed area is greater than an average crystal content X_{C2} in the non-exposed area; and/or,
the average crystal content X_{C1} in the exposed area satisfies 3.00% ≤ X_{C1} ≤ 25.00%, preferably 4.00% ≤ X_{C1} ≤ 20.00%, more preferably 4.00% ≤ X_{C1} ≤ 15.00% by mass percentage; and/or,
the average crystal content X_{C2} in the non-exposed area satisfies 0.50% ≤ X_{C2} ≤ 20.00%, preferably 1.00% ≤ X_{C2} ≤ 18.00%, more preferably 1.40% ≤ X_{C2} ≤ 13.00% by mass percentage.

12. The strengthened glass according to any one of claims 1 to 11, wherein the average crystal content X_{C1} in the exposed area is 4.27%, 7.12%, 8.31%, 7.53%, 10.23%, 14.42%, 5.42%, or 6.32% by mass percentage; and/or,
the average crystal content X_{C2} in the non-exposed area is 1.49%, 5.14%, 6.35%, 5.65%, 8.54%, 12.53%, 3.56%, or 4.45% by mass percentage.

13. The strengthened glass according to any one of claims 1 to 12, wherein the strengthened glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.13%, and Sb₂O₃: 0% to 0.50%, based on a mass percentage of oxides;
wherein X is Ag, Cu, Au, Bi, and/or the oxides thereof.

14. The strengthened glass according to any one of claims 1 to 13, wherein the strengthened glass comprises:
SiO₂ with a mass percentage of 66.00% to 74.50%, preferably SiO₂ with a mass percentage of 66.50% to 74.00%; and/or,
Al₂O₃ with a mass percentage of 5.10% to 9.70%, preferably Al₂O₃ with a mass percentage of 5.20% to 9.40%; and/or,
Li₂O with a mass percentage of 7.10% to 12.80%, preferably Li₂O with a mass percentage of 7.20% to 12.60%; and/or,
Na₂O with a mass percentage of 2.10% to 3.80%, preferably Na₂O with a mass percentage of 2.10% to 3.60%; and/or,
K₂O with a mass percentage of 2.10% to 3.95%, preferably K₂O with a mass percentage of 2.10% to 3.90%; and/or,
ZrO₂ with a mass percentage of 5.10% to 6.90%, preferably ZrO₂ with a mass percentage of 5.10% to 6.80%; and/or,
Ag₂O with a mass percentage of 0.05% to 0.80%, preferably Ag₂O with a mass percentage of 0.22% to 0.48%; and/or,
CeO₂ with a mass percentage of 0.05% to 0.12%, preferably CeO₂ with a mass percentage of 0.06% to 0.12%; and/or,
Sb₂O₃ with a mass percentage of 0.06% to 0.48%, preferably Sb₂O₃ with a mass percentage of 0.07% to 0.46%, based on the mass percentage of oxides.

15. The strengthened glass according to any one of claims 1 to 14, wherein the strengthened glass comprises:
SiO₂ with a mass percentage of 66.93%, 68.16%, 70.07%, 72.61%, 70.01%, 73.52%, 69.94%, or 72.40%; and/or,
Al₂O₃ with a mass percentage of 7.19%, 9.19%, 7.86%, 5.23%, 7.87%, 7.35%, 8.36%, or 5.87%; and/or,
Li₂O with a mass percentage of 12.32%, 11.56%, 8.95%, 10.25%, 8.93%, 7.33%, 9.77%, or 9.80%; and/or,
Na₂O with a mass percentage of 3.47%, 2.14%, 3.11%, 2.66%, 3.08%, 2.41%, 2.32%, or 2.84%; and/or,
K₂O with a mass percentage of 3.83%, 3.02%, 3.72%, 2.42%, 3.74%, 2.15%, 3.34%, or 2.34%; and/or,
ZrO₂ with a mass percentage of 5.62%, 5.12%, 5.74%, 6.25%, 5.71%, 6.78%, 5.54%, or 5.77%; and/or,
Ag₂O with a mass percentage of 0.25%, 0.41%, 0.37%, 0.35%, 0.39%, 0.33%, 0.28%, or 0.43%; and/or,
CeO₂ with a mass percentage of 0.12%, 0.08%, 0.09%, 0.11%, 0.06%, 0.10%, or 0.12%;
and/or,
Sb₂O₃ with a mass percentage of 0.27%, 0.32%, 0.09%, 0.12%, 0.16%, 0.07%, 0.35%, or 0.43%, based on the mass percentage of oxides.

16. The strengthened glass according to any one of claims 1 to 15, wherein a surface CS of the strengthened glass is greater than or equal to 300 MPa, preferably greater than or equal to 350 MPa.

17. The strengthened glass according to any one of claims 1 to 16, wherein a CS_50 of the strengthened glass is 50 MPa to 100 MPa, preferably 55 MPa to 95 MPa.

18. The strengthened glass according to any one of claims 1 to 17, wherein the exposed area has a low transmittance within an infrared wavelength range, and the non-exposed area has a high transmittance within the infrared wavelength range; and/or,
at a thickness of 0.70 mm, for light with a wavelength of 550 nm, a transmittance T₁ of the exposed area is less than 20%, preferably the transmittance T₁ is less than 10%, preferably the transmittance T₁ is less than 5%, preferably the transmittance T₁ is 0; a transmittance T₂ of the non-exposed area is greater than or equal to 90%; and/or,
at a thickness of 0.70 mm, for light with a wavelength of 850 nm, a transmittance T₃ of the exposed area is 0% to 10%, preferably the transmittance T₃ is less than 5%, and a transmittance T₄ of the non-exposed area is greater than or equal to 90%; and/or,
at a thickness of 0.70 mm, for light with a wavelength of 1000 nm, a transmittance T₅ of the exposed area is 0% to 5%, and a transmittance T₆ of the non-exposed area is greater than or equal to 90%.

19. The strengthened glass according to any one of claims 1 to 18, wherein a crystalline phase of the exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal; and/or,
a crystalline phase of the non-exposed area comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

20. A preparation method for the strengthened glass according to any one of claims 1 to 19, comprising:
obtaining the substrate glass; performing masking treatment on the first area of the substrate glass, and not performing masking treatment on the second area of the substrate glass; then performing processing treatment on the first area and the second area to obtain the non-exposed area and the exposed area respectively, wherein the processing treatment comprises radiation treatment, heat treatment, and strengthening treatment; wherein the first area of the substrate glass corresponds to the first area of the strengthened glass, and the second area of the substrate glass corresponds to the second area of the strengthened glass;
the average density ρ₁ of the exposed area is greater than the average density ρ₂ of the non-exposed area, and the difference Δρ between the average density ρ₁ of the exposed area and the average density ρ₂ of the non-exposed area is ≤ 0.01 g/cm³, preferably the difference Δρ is ≤ 0.005 g/cm³.

21. The preparation method for the strengthened glass according to claim 20, wherein the average density ρ₁ of the exposed area satisfies 2.0000 g/cm³ ≤ ρ₁ ≤ 3.0000 g/cm³, preferably 2.3000 g/cm³ ≤ ρ₁ ≤ 2.7000 g/cm³, more preferably 2.3000 g/cm³ ≤ ρ₁ ≤ 2.5000 g/cm³; and/or,
the average density ρ₂ of the non-exposed area satisfies 2.0000 g/cm³ ≤ ρ₂ ≤ 3.0000 g/cm³, preferably 2.3000 g/cm³ ≤ ρ₂ ≤ 2.7000 g/cm³, more preferably 2.4000 g/cm³ ≤ ρ₂ ≤ 2.5000 g/cm³.

22. The preparation method for the strengthened glass according to any one of claims 20 to 21, wherein the average crystal content X_{C1} in the exposed area is greater than the average crystal content X_{C2} in the non-exposed area; and/or,
the average crystal content X_{C1} in the exposed area satisfies 3.00% ≤ X_{C1} ≤ 25.00%, preferably 4.00% ≤ X_{C1} ≤ 20.00%, more preferably 4.00% ≤ X_{C1} ≤ 15.00% by mass percentage; and/or,
the average crystal content X_{C2} in the non-exposed area satisfies 0.50% ≤ X_{C2} ≤ 20.00%, preferably 1.00% ≤ X_{C2} ≤ 18.00%, more preferably 1.40% ≤ X_{C2} ≤ 13.00% by mass percentage.

23. The preparation method for the strengthened glass according to any one of claims 20 to 22, wherein the substrate glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.13%, and Sb₂O₃: 0% to 0.50%, based on the mass percentage of oxides;
wherein X is Ag, Cu, Au, Bi, and/or the oxides thereof.

24. A cover plate glass made of the strengthened glass according to any one of claims 1-19 or the strengthened glass prepared by the preparation method according to any one of claims 20-23.

25. An electronic device, comprising the strengthened glass according to any one of claims 1-19 or the strengthened glass prepared by the preparation method according to any one of claims 20-23.

26. The electronic device according to claim 25, comprising a housing, and the housing comprises the strengthened glass according to any one of claims 1-19 or the strengthened glass prepared by the preparation method according to any one of claims 20-23.

27. The electronic device according to claim 26, wherein the electronic device further comprises a camera component, the housing comprises a camera protection cover plate, the camera protection cover plate is disposed over the camera component, and the camera protection cover plate comprises the strengthened glass according to any one of claims 1-19 or the strengthened glass prepared by the preparation method according to any one of claims 20-23.

28. Use of the strengthened glass according to any one of claims 1-19 or the strengthened glass prepared by the preparation method according to any one of claims 20-23 in a component for a mobile phone, a smart watch, a wearable device, a camera module, or a vehicle.
